(19) Europäisches Patentamt
European Patent Office
Office européen des brevets

(11) Veröffentlichungsnummer: **0 115 583**
**B1**

# (12) EUROPÄISCHE PATENTSCHRIFT

(45) Veröffentlichungstag der Patentschrift: **17.12.86**

(51) Int. Cl.⁴: **G 02 B 1/06**

(21) Anmeldenummer: **83111312.1**

(22) Anmeldetag: **12.11.83**

(54) **Immersionsöl.**

(30) Priorität: **14.12.82 CH 7259/82**

(43) Veröffentlichungstag der Anmeldung: **15.08.84 Patentblatt 84/33**

(45) Bekanntmachung des Hinweises auf die Patenterteilung: **17.12.86 Patentblatt 86/51**

(84) Benannte Vertragsstaaten: **AT CH DE GB LI**

(56) Entgegenhaltungen:
**CHEMICAL ABSTRACTS, Band 67, Nr. 25, 18. Dezember 1967, Seite 11184, Nr. 118418d, Columbus, Ohio, USA L.V. SERGEEV et al.: "Synthetic immersion oil for microscope objectives"**

(73) Patentinhaber: **F. HOFFMANN- LA ROCHE & CO. Aktiengesellschaft, CH- 4002 Basel (CH)**

(72) Erfinder: **Hirth, Georges, 7 rue de l'ancre, F-68330 Huningue (FR)**
Erfinder: **Petrzilka, Martin, Dr., Violaweg 74, CH- 4303 Kaiseraugst (CH)**
Erfinder: **Pracht, Inge, Rössligasse 41, CH- 4125 Riehen (CH)**

(74) Vertreter: **Cottong, Norbert A., Grenzacherstrasse 124 Postfach 3255, CH- 4002 Basel (CH)**

**EP 0 115 583 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft die Verwendung von Glycerol-1,2-carbonaten für Immersionsöle sowie ein neues Immersionsöl und dessen Verwendung in der Optik, insbesondere in der Fluoreszenzmikroskopie.

Die Bezeichnung "Immersionsöl" ist ein in der Mikroskopie geläufiger Fachausdruck und bedeutet nicht Oele im sonst üblichen Sinne, sondern umfasst allgemein Immersionsmittel, welche für eine Immersionsoptik geeignet sind.

Oelimmersionsoptiken sind in der modernen Mikroskopie und in verwandten Gebieten weit verbreitet, da sie eine höhere Auflösung und Helligkeit sowie eine wesentlich geringere sphärische Aberration als die trockene Optik oder die Wasserimmersionsoptik ermöglichen. Das Immersionsöl, welches den Zwischenraum zwischen Objektiv und Deckglas bzw. dem zu untersuchenden Präparat vollständig ausfüllt, bildet einen Teil des optischen Systems und muss deshalb möglichst genau auf dieses abgestimmt sein. Zumindest sollte der Brechungsindex $n_D$ des Immersionsöles dem Glas der Objektivfrontlinse angepasst sein, d.h. er sollte bei 23°C etwa 1,500-1,525 betragen. Nach Uebereinkunft der Mikroskophersteller und entsprechenden Festlegungen des Deutschen Institutes für Normen sollte ein Immersionsöl folgenden Anforderungen bezüglich der Brechungsindices $n_D$ und $n_e$ und der Dispersion $v_e$ genügen: $n_D$ (23°C) = 1,515, $n_e$ (23°C) 1,518 ± 0,0004 und $v_e$ = 44 + 5. Ferner sollte das Immersionsöl gut UV-durchlässig und möglichst fluoreszenzfrei sein und Glas, Kunststoff-Objektträger, Linsenkitt und die meisten der zu untersuchenden Proben nicht angreifen. Das Immersionsöl soll zudem farblos, möglichst geruchlos und nicht hygroskopisch sein, eine Viskosität besitzen, die eine bequeme Handhabung ermöglicht, auf den Benützer keinen schädigenden Einfluss haben und eine konstante Zusammensetzung aufweisen, d.h. es darf insbesondere keine optische Veränderung durch den Einfluss von Licht, Luft, Temperatur und dergleichen eintreten.

Die bisher bekannten Immersionsöle bestanden meistens aus Mischungen von Mineralölen, Paraffinölen und/oder Polyisobutylen mit Verbindungen von hohem Brechungsindex, wie beispielsweise polychlorierte Biphenyle oder hydrierte Terphenyle (US-A-3,929,667). Aus der EP-A-00 63 684 ist ferner ein Immersionsöl auf der Basis von Thioäthern bekannt. Polychlorierte Biphenyle greifen jedoch Kunststoffmaterialien, z.B. Kunststoff-Objektträger, an. Ferner sind sie bekannt als toxisch und umweltgefährdend und werden deshalb nur noch verwendet, wo es wegen ihrer günstigen Fluoreszenzeigenschaften unbedingt erforderlich ist. Die übrigen vorbekannten Immersionsöle weisen hingegen andere Nachteile auf, z.B. eine mässige bis geringe, aber doch störende Fluoreszenz im UV-Licht, eine relativ schlechte Durchlässigkeit, Schlierenbildung oder Auflösung des Linsenkittes.

Es wurde nun gefunden, dass sich Glycerol-1,2-carbonate der allgemeinen Formel

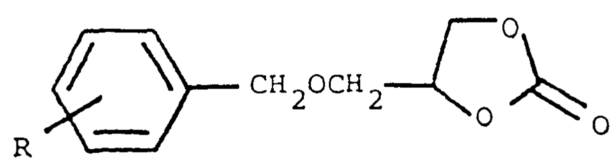

I

worin R Wasserstoff oder Methyl bedeutet,
besonders gut für Immersionsöle eignen.

Die Verbindungen der Formel I sind bekannte oder Analoge bekannter Verbindungen und können nach bekannten Methoden hergestellt werden [J. Chem. Boc. 1553 (1965)]. In Formel I steht vorzugsweise R für Wasserstoff.

Die Verbindungen der Formel I besitzen bereits in reiner Form nahezu optimale Brechungsindices und Dispersionswerte. Beispielsweise ist für 3-O-Benzylglycerol-1,2-carbonat (Verbindung der Formel I, worin R Wasserstoff bedeutet) $n_D$ (23°C) = 1,518 und $v_e$ = 41. Ferner wurde insbesondere gefunden, dass die Verbindungen der Formel I sehr gut UV-durchlässig, praktisch fluoreszenzfrei (UV- bis Blau-Anregung), nicht aggressiv gegenüber Glas, Kunststoffmaterialien, Linsenkitt oder den am häufigsten zu untersuchenden Proben, geruchlos und nicht umweltgefährdend sind.

Die Erfindung betrifft ein Immersionsöl mit mindestens 2 Komponenten, dadurch gekennzeichnet, dass mindestens eine Komponente eine Verbindung der Formel I ist.

Der Brechungsindex $n_D$ des erfindungsgemässen Immersionsöles beträgt bei 23°C zweckmässig etwa 1,500-1,525 und vorzugsweise etwa 1,515.

Das erfindungsgemässe Immersionsöl kann aus 2 oder mehreren Verbindungen der Formel I bestehen. Im allgemeinen besteht es jedoch aus einer oder mehreren Verbindungen der Formel I und einer oder mehreren weiteren Komponenten zur Optimierung des Brechungsindex, der Viskosität und dergleichen. Hierbei ist jedoch zu beachten, dass diese weiteren Komponenten mit den Verbindungen der Formel I gut mischbar sein

müssen, und dass sie, abgesehen vom Brechungsindex, den obigen Anforderungen ebenfalls möglichst weitgehend genügen sollten. Insbesondere sollten sie möglichst fluoreszenzfrei und gut UV-durchlässig sein. Derartige Zusätze sind dem Fachmann grundsätzlich bekannt. Beispiele geeigneter Zusätze sind 2-(Hydroxymethyl)thiophen, Lycopan, Isophytol, 1,2,3-Trimethoxypropan, 1,3-Dimethoxy-2-propanol, Phythylmethyläther und insbesondere die aliphatischen Glykole und Glykoläther, z.B. Polyäthylenglykol, Tetraäthylenglykoldimethyläther und dergleichen. Bevorzugte Zusätze sind die Polyäthylenglykole, welche je nach gewünschter Viskosität und gewünschtem Temperaturbereich unterschiedliche Polymerisationsgrade aufweisen können. Für die meisten Anwendungen haben sich Polyäthylenglykole mit einem durchschnittlichen Molekulargewicht von etwa 200-4000, insbesondere etwa 1000, als besonders geeignet erwiesen.

Der Anteil an Verbindungen der Formel I im erfindungsgemässen Immersionsöl kann je nach Bedeutung des Restes R, Art der weiteren Komponenten, gewünschtem Brechungsindex und dergleichen in einem weiten Bereich variieren. Aufgrund der nahezu optimalen Eigenschaften der Verbindungen der Formel I wird man jedoch im allgemeinen den Anteil an Verbindungen der Formel I möglichst hoch wählen. Bevorzugt enthalten die erfindungsgemässen Immersionsöle daher mindestens etwa 80 Gew.-% und besonders bevorzugt etwa 90-98 Gew.-% an Verbindungen der Formel I.

Besonders bevorzugt ist ein Immersionsöl, welches aus 3-O-Benzylglycerol-1,2-carbonat (etwa 90-95 Gew.-%) und Polyäthylenglykol (Rest), vorzugsweise einen Polyäthylenglykol mit einem durchschnittlichen Molekulargewicht von etwa 1000, besteht.

Die Herstellung der erfindungsgemässen Immersionsöle und die Optimierung des Brechungsindex kann in an sich bekannter Weise erfolgen, z.B. durch Mischen der ungefähren Mengen der Komponenten bei erhöhter Temperatur, Abkühlen, Messen des Brechungsindex und, gegebenenfalls, Zugabe der entsprechenden Komponente (bzw. Komponenten), bis der gewünschte Brechungsindex erreicht ist.

Die erfindungsgemässen Immersionsöle besitzen die geforderten Eigenschaften und sind insbesondere nicht mit den Nachteilen der vorbekannten Immersionsöle behaftet. Da sie wasserunlöslich sind, wird die Gefahr, dass Farbstoff aus nicht eingedeckten, gefärbten mikroskopischen Schnitten oder Ausstrichpräparaten (z.B. Blutausstrichen) herausgelöst wird oder nicht genügend fixierte Objekte abschwimmen, weitgehend vermieden. Anderseits sind die erfindungsgemässen Immersionsöle in den meisten gebräuchlichen organischen Lösungsmitteln (z.B. Chloroform, Methylenchlorid, Diäthyläther, Aethanol, Benzol, Toluol, Xylol, Petroläther) löslich, was die Reinigung der Objektive und der Objektträger wesentlich erleichtert.

Die erfindungsgemässen Immersionsöle können in verschiedenen Bereichen der Optik Verwendung finden. Beispielsweise können sie aufgrund der hohen Durchlässigkeit anstelle von Immersionsglycerin und in der Absorptionsphotometrie verwendet werden. Weiterhin können sie als optische Eichsubstanz, als flüssiges Trägermedium, als optisches Kupplungsmedium (Glasfaseroptik), als transparente Untersuchungsflüssigkeit (z.B. zur Prüfung von Kontaktlinsen oder in der Elektronikindustrie) und dergleichen verwendet werden. Bevorzugtes Anwendungsgebiet ist jedoch die Mikroskopie und insbesondere die Fluoreszenzmikroskopie.

Die oben erwähnte Fluoreszenzfreiheit ist im Rahmen der vorliegenden Erfindung so zu verstehen, dass die Fluoreszenz des Immersionsöles in einer horizontalen Quarzküvette mit 0,2 mm Schichtdicke bei der quantitativen Messung im Fluoreszenzmikroskop von Wasser nicht signifikant verschieden ist. Je nach Art der Zusätze und Reinheit der Komponenten zeigen die erfindungsgemässen Immersionsöle keine oder eine sehr geringe Fluoreszenz.

Die vorliegende Erfindung wird durch die folgenden Beispiele weiter veranschaulicht. Die Eigenfluoreszenz wurde in Quarzküvetten von 0,2 mm Schichtdicke mit einem ZEISS-Mikroskop-Fluorometer für die drei Anregungen UV, Violett und Blau gemessen. Die relative Fluoreszenz wurde durch Vergleich mit Wasser (0%) und einem Standard (SF 1, Dicke 5 mm; 100%) ermittelt. Die Messgenauigkeit betrug ca. 1%.

**Beispiel 1**

Ca. 92,5 Gewichtsteile DL-3-0-Benzylglycerol-1 2-carbonat und ca. 7 5 Gewichtsteile Carbowax® 1000 (Polyäthylenglykol mit durchschnittlichem Molekulargewicht ca. 1000; reinste Qualität) wurden unter Erwärmen gemischt, bis eine klare homogene Flüssigkeit erhalten wurde, und dann auf 23°C abgekühlt. Durch Zugabe geringer Mengen DL-3-0-Benzylglycerol-1,2-carbonat oder Carbowax® 1000 wurde schliesslich der Brechungsindex $n_D$ (23°C) exakt auf 1,515 eingestellt.

Das erhaltene Immersionsöl war farblos und geruchlos und hatte folgende technische Eigenschaften:

| | |
|---|---|
| Brechungsindices bei 23°C | $n_e$ (546,07 nm) = 1,518<br>$n_D$ (589,26 nm) = 1,515 |
| Temperaturabhängigkeit des Brechungsindex | $\Delta n/\Delta T$ = 0,0004/°C |
| Dispersion (Abbé) bei 23°C | $\nu_e$ = 39 |
| Fluoreszenz für UV-, Violett- und Blauanregung | 0,3% bzw. 0,7% bzw. 0% (von destilliertem Wasser im Mikroskop nicht zu unterscheiden) |
| Dichte bei 23°C | 1,21 g/ml |
| Viskosität bei 23°C | 96 mPa.s |
| Trübungspunkt | <-20°C |
| Spektrale Durchlüssigkeit $\tau_i$ (0,2 mm Schichtdicke) | 50% bei ca. 280 nm |

**Beispiel 2**

Ca. 96 Gewichtsteile DL-3-O-Benzylglycerol-1,2-carbo-nat und ca. 4 Gewichtsteile Tetraäthylenglykoldimethyläther wurden in analoger Weise zu Beispiel 1 gemischt und dann der Brechungsindex $n_D$ (23°C) exakt auf 1,515 eingestellt.

Das erhaltene Immersionsöl war farblos und geruchlos und hatte folgende technische Eigenschaften:

| | |
|---|---|
| Brechungsindices bei 23°C | $n_e$ (546,07 nm) = 1,518<br>$n_D$ (589,26 nm) = 1,515 |
| Temperaturabhängigkeit des Brechungsindex | $\Delta n/\Delta T$ = 0,0004/°C |
| Dispersion (Abbé) bei 23°C | $\nu_e$ = 38 |
| Fluoreszenz für UV-, Violett- und Blauanregung | 0,5% bzw. 0,7% bzw. 0% (von destilliertem Wasser im Mikroskop nicht zu unterscheiden) |

| | |
|---|---|
| Dichte bei 23°C | 1,20 g/ml |
| Viskosität bei 23°C | 61 mPa.s |
| Trübungspunkt | <-20°C |
| Spektrale Durchlässigkeit $\tau_i$ (0,2 mm Schichtdicke) | 50% bei ca. 280 nm |

**Patentansprüche**

1. Immersionsöl mit mindestens 2 Komponenten, dadurch gekennzeichnet, dass mindestens eine Komponente eine Verbindung der allgemeinen Formel

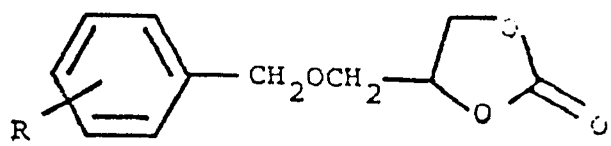

worin R Wasserstoff oder Methyl bedeutet, ist.

2. Immersionsöl nach Anspruch 1, dadurch gekennzeichnet, dass es 3-O-Benzylglycerol-1,2-carbonat enthält.

3. Immersionsöl nach Anspruch 1 oder 2, dadurch gekennzeichnet, dass es als weitere Komponente ein aliphatisches Glykol oder einen aliphatischen Glykoläther enthält.

4. Immersionsöl nach einem der Ansprüche 1 bis 3, dadurch gekennzeichnet, dass es mindestens 80 Gew.-% einer oder mehrerer Verbindungen der Formel I enthält.

5. Immersionsöl nach Anspruch 4 dadurch gekennzeichnet, dass es 90-98 Gew.-% einer oder mehrerer Verbindungen der Formel I enthält.

6. Immersionsöl nach einem der Ansprüche 1 bis 5, dadurch gekennzeichnet, dass es eine oder mehrere Verbindungen der Formel I und Polyäthylenglykol mit einem durchschnittlichen Molekulargewicht von 200-4000 enthält.

7. Immersionsöl nach Anspruch 6 dadurch gekennzeichnet, dass es eine oder mehrere Verbindungen der Formel I und Polyäthylenglykol mit einem durchschnittlichen Molekulargewicht von etwa 1000 enthält.

8. Immersionsöl nach einem der Ansprüche 1 bis 7, dadurch gekennzeichnet, dass es aus 3-O-Benzylglycerol-1,2-carbonat und Polyäthylenglykol besteht und der Anteil an 3-O-Benzylglycerol-1,2-carbonat 90-95 Gew.-% beträgt.

**Claims**

1. Immersion oil with at least 2 components, characterized in that at least one component is a compound of the general formula

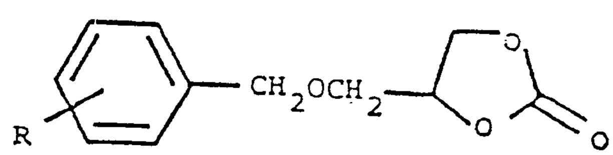

I

wherein R signifies hydrogen or methyl.

2. Immersion oil according to claim 1, characterized in that it contains 3-O-benzylglycerol 1,2-carbonate.

3. Immersion oil according to claim 1 or 2, characterized in that it contains an aliphatic glycol or an aliphatic glycol ether as a further component.

4. Immersion oil according to claims 1 to 3, characterized in that it contains at least 80 wt.% of one or more compounds of formula I.

5. Immersion oil according to claim 4, characterized in that it contains 90-98 wt.% of one or more compounds of formula I.

6. Immersion oil according to any one of claims 1 to 5, characterized in that it contains one or more compounds of formula I and polyethylene glycol with an average molecular weight of 200-4000.

7. Immersion oil according to claim 8, characterized in that it contains one or more compounds of formula I and polyethylene glycol with an average molecular weight of about 1000.

8. Immersion oil according to any one of claims 1 to 7, characterized in that it consists of 3-O-benzylglycerol 1,2-carbonate and polyethylene glycol and the amount of 3-O-benzylglycerol 1,2-carbonate amounts to 90-95 wt.%

**Revendications**

1. Huile pour immersion contenant au moins deux composants, caractérisée en ce que l'un au moins des composants est un composé de formule générale

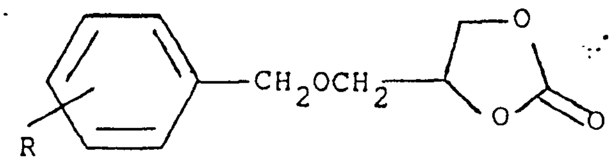

I

dans laquelle R représente l'hydrogène ou un groupe méthyle.

2. Huile pour immersion selon la revendication 1, caractérisée en ce qu'elle contient du 3-O-benzyl-glycérol-1,2-carbonate.

3. Huile pour immersion selon la revendication 1 ou 2, caractérisée en ce qu'elle contient en tant qu'autre composant un glycol aliphatique ou un éther de glycol aliphatique.

4. Huile pour immersion selon l'une des revendications 1 à 3, caractérisée en ce qu'elle contient au moins 80% en poids d'un ou plusieurs composés de formule I.

5. Huile pour immersion selon la revendication 4, caractérisée en ce qu'elle contient de 90 à 98% en poids d'un ou plusieurs composés de formule I.

6. Huile pour immersion selon l'une des revendications 1 à 5, caractérisée en ce qu'elle contient un ou plusieurs composés de formule I et un polyéthylène-glycol à un poids moléculaire moyen de 200 à 4000.

7. Huile pour immersion selon la revendication 6, caractérisée en ce qu'elle contient un ou plusieurs composés de formule I et un polyéthylène-glycol à un poids moléculaire moyen d'environ 1000.

8. Huile pour immersion selon l'une des revendications 1 à 7, caractérisée en ce qu'elle comporte du 3-O-benzylglycérol-1,2-carbonate et un polyéthylèneglycol et en ce que la proportion en 3-O-benzylglycérol-1,2-carbonate est de 90 à 95% en poids.